# EUROPÄISCHE PATENTSCHRIFT

(11) **EP 1 379 843 B1**
(45) Veröffentlichungstag und Bekanntmachung des Hinweises auf die Patenterteilung: **18.05.2005**
(21) Anmeldenummer: 02713086.3
(22) Anmeldetag: 20.03.2002
(51) Int. Cl.: G01G 21/28, B65H 75/36

(54) **WAAGEN MIT UNTERBODEN-KABELAUFBEWAHRUNG**
SCALES WITH CABLE STORAGE INTEGRATED INTO THE BASE THEREOF
BALANCE DOTEE D'UN ESPACE DE STOCKAGE DE CABLE SITUE DANS SON SOCLE

(30) Priorität: 29.03.2001 DE 10115788
(43) Veröffentlichungstag der Anmeldung: 14.01.2004
(73) Patentinhaber: Mettler-Toledo GmbH, 8606 Greifensee (CH)
(72) Erfinder: FRINGELI, Eduard, CH-8606 Bubikon (CH); LÜCHINGER, Paul, CH-8610 Uster (CH)
(86) Internationale Anmeldenummer: PCT/IB2002/000812
(87) Internationale Veröffentlichungsnummer: WO 2002/079735

(56) Entgegenhaltungen:
- EP-A- 1 160 548
- DE-A- 19 858 625
- DE-B- 1 197 718
- US-A- 5 175 398
- PATENT ABSTRACTS OF JAPAN vol. 008, no. 262 (M-341), 30. November 1984 (1984-11-30) & JP 59 133179 A (SANYO DENKI KK), 31. Juli 1984 (1984-07-31)

## Beschreibung

Die Erfindung betrifft eine Waage mit einem Gehäuse welches nach unten durch einen Boden abgeschlossen ist, mit einer Anzeige- und Bedieneinheit, die durch mindestens ein Kabel mit der Waage verbindbar ausgestaltet ist, wobei die Anzeige- und Bedieneinheit sowohl nahe dem Gehäuse als auch entfernt vom Gehäuse platzierbar ist.

Waagen mit abgesetzter Anzeige- und Bedieneinheit sind weit verbreitet, da sie eine hohe Flexibilität hinsichtlich ihrer Aufstellung aufweisen. Insbesondere lässt sich in einigen Fällen die Anzeige- und Bedieneinheit sowohl nahe der Waage als auch entfernt von dieser platzieren, wobei die Waage und die Anzeige- und Bedieneinheit meist durch ein Kabel zur Übertragung elektrischer Signale verbunden sind. Es ist wünschenswert die Länge des Verbindungskabels stets auf dem benötigten Abstand zu halten. Diese Kabel sind daher häufig am Boden der Waage fixiert und müssen bei Bedarf von einer Fixierrolle oder aus einer Führungs- und Fixierrinne abgewickelt bzw. auf diese aufgewickelt werden, was ein Umdrehen oder doch zumindest ein Anheben der Waage erfordert.

In der DE 31 01 224 A1 ist eine Personenwaage beschrieben deren Anzeige- und Bedieneinheit entfernt von der Waage, beispielsweise an einer Wand befestigt werden kann. Die Anzeige- und Bedieneinheit weist einen Aufnahmeraum für Batterien auf und zwischen diesem und der Aussenwandung ihres Gehäuses einen Freiraum, in den das Verbindungskabel eingelegt werden kann, wenn die Waage nicht benutzt wird.

Die DE 198 58 625 A1 offenbart eine Waage, deren Anzeige- und Bedienpult abnehmbar ausgestaltet ist, wobei im Bodenbereich des Bedienpultes, welches ausserdem gegen das Waagengehäuse verschwenkbar ist, ein Hohlraum für eine Kabelaufwicklung vorgesehen ist. Der Hohlraum wird von einer Bodenplatte nach unten bedeckt. Um das Kabel entsprechend der gewünschten Entfernung zwischen Waage einerseits und Anzeige- und Bedienpult andererseits in seiner Länge anzupassen, muss nun lediglich das Anzeige- und Bedienpult in eine senkrechte Lage geklappt werden, die Bodenplatte entfernt und das Kabel auf- beziehungsweise abgewickelt werden.

Nachteilig bei dem beschriebenen Stand der Technik ist, dass beim Umplatzieren der Anzeige- und Bedieneinheit jedes Mal ein gewisser Aufwand betrieben werden muss, um die Länge des Verbindungskabels entsprechend anzupassen, sei es durch Kippen oder Anheben der Waage, was sich ungünstig auf deren Stabilität auswirken kann, oder sei es durch Abschrauben einer den Hohlraum zur Kabelunterbringung verschliessenden Bodenplatte und Ab- oder Aufwickeln des betreffenden Kabels.

Aufgabe der vorliegenden Erfindung ist es daher eine Vorrichtung zu schaffen, die eine Veränderung der Lage der Anzeige- und Bedieneinheit erlaubt, ohne weitere Eingriffe in die Waage oder deren Anzeige- und Bedieneinheit.

Diese Aufgabe wird erfindungsgemäss mit den Merkmalen des Patentanspruchs 1 gelöst. Eine Waage mit einem einen Boden aufweisenden Gehäuse, ist mit einer Anzeige- und Bedieneinheit durch mindestens ein Kabel verbindbar. Die Anzeige- und Bedieneinheit kann sowohl am Gehäuse als auch entfernt vom Gehäuse platziert werden, wofür am Boden des Gehäuses ein Schacht für die Unterbringung überschüssiger Länge des mindestens einen Kabels angebracht ist. Der Schacht, dessen Höhe einerseits durch die Dicke des Kabels bestimmt ist und andererseits durch die Forderung, dass sich das Kabel nicht in vertikaler Richtung verbiegen darf, ist mit mindestens einem Ausgang für den Durchtritt des Kabels versehen und im Schacht ist das Kabel beim Herausziehen und Hineinschieben frei beweglich.

Von besonderem Vorteil bei dieser Waage ist, dass der genannte Vorgang des Umplatzierens der Anzeige- und Bedieneinheit mit einer Hand ausgeführt werden kann, und zwar sowohl für das Annähern der Anzeige- und Bedieneinheit an das Waagengehäuse als auch für deren Entfernen vom Waagengehäuse. Da die Waage nicht bewegt werden muss, ist ihre Stabilität gewährleistet. Jede gewünschte Entfernung der Anzeige- und Bedieneinheit vom Waagengehäuse kann eingestellt werden, ohne dass das Kabel in überflüssiger Länge den Arbeitsplatz bedeckt.

Sollte der Arbeitsplatz beispielsweise durch verschüttetes Wägegut verunreinigt sein, ist er einfach und sicher zu reinigen, indem die Anzeige- und Bedieneinheit mit einer Hand angehoben wird. Ein weiterer Vorteil ergibt sich daraus, dass die Anzeige- und Bedieneinheit vom Waagengehäuse getrennt werden kann und somit bei einer Transportverpackung ein günstigeres Volumen beansprucht.

In einer bevorzugten Ausführungsform der vorliegenden Erfindung ist der Schacht in den Bodenraum integriert. Vorzugsweise sind im Schacht Führungselemente für das Kabel vorhanden, die als in den Schacht integrierte Führungsbogen, insbesondere in haken-, u- oder s-förmiger Ausgestaltung, ausgebildet sind. Das Kabel ist mittels eines Steckers mit der Wäge-Elektronik im Inneren der Waage verbindbar.

Eine besonders bevorzugte Weiterbildung sieht vor, dass die Anzeige- und Bedieneinheit mittels eines Zwischenstücks am Gehäuse geführt ist und dass das Zwischenstück am Gehäuse oder an der Anzeige- und Bedieneinheit einsteckbar ausgestaltet ist. Damit kann die Waage zusammen mit der Anzeige- und Bedieneinheit angehoben und die Unterlage gereinigt werden oder die Waage kann auf einfache Weise an einen anderen Arbeitsplatz transportiert werden.

Das Zwischenstück verfügt über eine Plattform, die als Informationsträger genutzt werden kann. Alternativ kann am Zwischenstück eine Sende-Empfangseinheit angebracht sein, wobei elektronische Signale zwischen dieser und einer weiteren Sende-Empfangseinheit, beispielsweise angebracht an einer Anzeige- und Bedieneinheit übermittelt werden. Die damit erreichte äusserst flexible Handhabung der Anzeige- und Bedieneinheit erweist sich besonders dann als vorteilhaft, wenn die Waage in einer geschützten Umgebung, beispielsweise einer Glovebox, aufgestellt ist, und die Anzeige- und Bedieneinheit dann von aussen bedient werden kann.

In einer weiteren Ausführungsform der Waage weist der Schacht auf verschiedenen Seiten jeweils mindestens einen Ausgang für das Kabel auf. Er kann jedoch auch für die Unterbringung von mehr als einem Kabel ausgestaltet sein, welche durch verschiedene Ausgänge herausziehbar und hineinschiebbar sind. Nach unten ist der Schacht durch eine Bodenplatte abgeschlossen.

Eine besonders vorteilhafte Ausbildung der Erfindung sieht vor, dass das mindestens eine Kabel an dem mit der Anzeige- und Bedieneinheit verbindbaren Kabelende einen Stecker aufweist, dessen zugehörige Buchse in der Anzeige- und Bedieneinheit untergebracht ist, und dass die Anzeige in ihrer Neigung verstellbar ist. Es können auch mehrere Anzeige- und Bedieneinheiten mit der Waage verbunden werden.

Weitere Einzelheiten der Erfindung ergeben sich anhand der in den Zeichnungen schematisch dargestellten Ausführungsformen eines im Folgenden beschriebenen Ausführungsbeispiels. Es zeigen:
- Figur 1: eine perspektivische Darstellung der Waage mit abgenommener Anzeige- und Bedieneinheit,
- Figur 2: eine Seitenansicht der Waage, teilweise angeschnitten,
- Figur 3: eine alternative Ausführungsform einer Verbindung der Anzeige- und Bedieneinheit mit einem Zwischenstück,
- Figur 4: eine perspektivische Sicht in einen im Bodenraum der Waage ausgebildeten Schacht mit einem aus der Verbindung mit der Elektronik gelöstem Kabel,
- Figur 5: eine perspektivische Sicht in einen im Bodenraum der Waage ausgebildeten Schacht mit zum vorderen Ausgang geführtem Kabel,
- Figur 6: eine perspektivische Sicht in einen im Bodenraum der Waage ausgebildeten Schacht mit zum vorderen Ausgang heraus gezogenem Kabel,
- Figur 7: eine perspektivische Sicht in einen im Bodenraum der Waage ausgebildeten Schacht mit zum hinteren Ausgang geführtem Kabel,
- Figur 8: eine Bodenplatte zum Verschluss des Schachts,

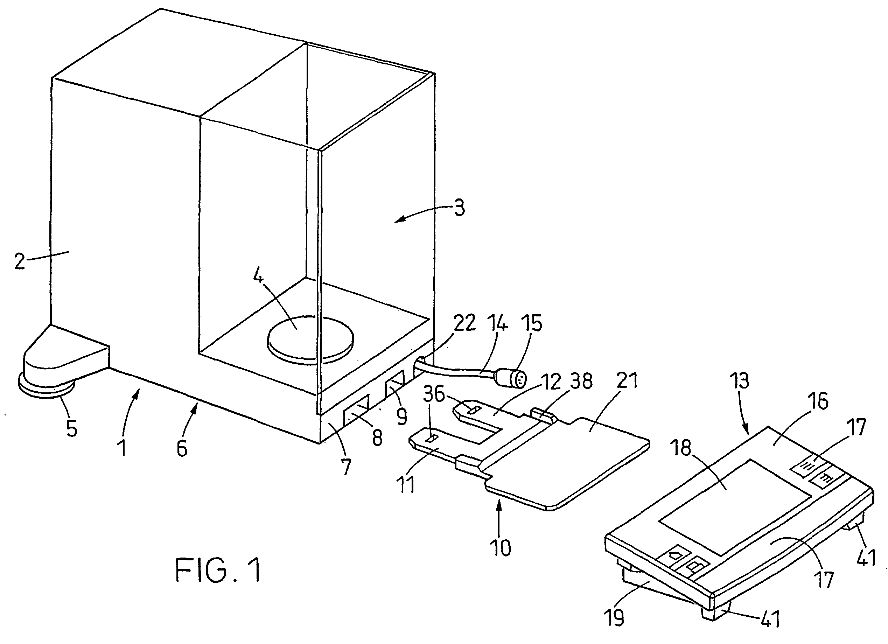

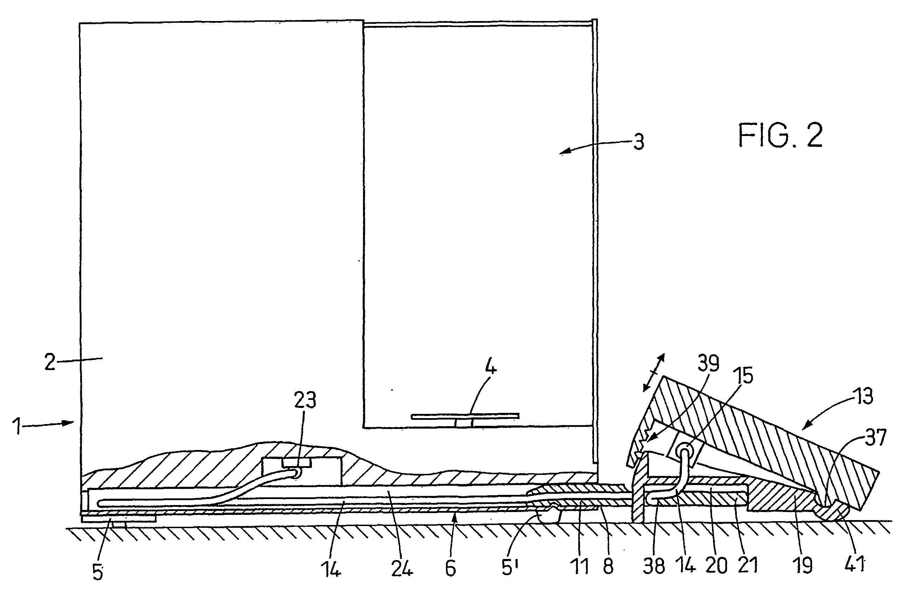

Die Figur 1 zeigt in perspektivischer Sicht eine von einem Gehäuse 1 umgebene Waage, wie sie beispielweise als Analysenwaage Verwendung findet. Im hinteren Teil 2 des Gehäuses 1 befinden sich (in der Figur nicht sichtbar) die Wägezelle und die Wäge-Elektronik. Der vordere Teil des Gehäuses 1 wird durch den Wägeraum 3 gebildet, welcher mittels bewegbarer Scheiben zum Einbringen und Auflegen des Wägeguts auf die Waagschale 4 geöffnet und anschliessend wieder geschlossen werden kann. Nach unten wird das Gehäuse 1 von einem Boden 6 abgeschlossen. Die Waage steht beispielsweise auf drei Füssen 5, 5', wovon einer, vorzugsweise zur Nivellierung der Waage in der Höhe verstellbar ausgebildet, aus dem hinteren Ende des Waagengehäuses 1 seitlich vorragend, in der Figur 1 zu sehen ist. Ein weiterer, ebenfalls zur Nivellierung der Waage in der Höhe verstellbarer Fuss befindet sich am hier nicht sichtbaren hinteren Ende des Waagengehäuses. Ein dritter Fuss 5' (siehe Figur 2) ist unterhalb des Wägeraums 3 am Boden 6 angebracht. Der Boden 6 des Gehäuses 1 ist als Hohlraum oder Schacht ausgestaltet, wie weiter unten anhand der Figuren 2 und 4 bis 7 näher erläutert wird. An der Vorderseite 7 des Gehäuses 1 weist dieser Hohlraum zwei Öffnungen 8, 9 auf, in welche ein Zwischenstück 10 mittels zweier flacher Zapfen 11, 12 eingeklinkt werden kann. Das Zwischenstück 10 dient der Halterung und Führung einer Anzeige- und Bedieneinheit 13, die sowohl direkt am Gehäuse 1 als auch von diesem entfernt platziert werden kann. Ein Verbindungskabel 14 mit einem Stecker 15 schafft die elektrische Verbindung zwischen der im Waagengehäuse 1 befindlichen Wäge-Elektronik und der Anzeige- und Bedieneinheit 13 und ist in der Rinne 38 am Zwischenstück 10 geführt.

Die Anzeige- und Bedieneinheit 13 ist pultförmig dem Anwender zu geneigt ausgebildet und weist an ihrer Oberseite 16 sowohl Bedientasten 17 als auch ein Anzeigefeld 18 auf. An ihrer Unterseite ist sie mit einem keilförmigen Sockel 19 verbunden. Dieser Sockel 19 steht auf zwei auf der dem Anwender zugewandten Seite angebrachten Füssen 41 sowie mindestens zwei weiteren Auflagepunkten am hinteren Ende des Sockels 19 fest auf der Unterlage auf. Sowohl die Auflagepunkte als auch die Füsse 41 können die Anzeige- und Bedieneinheit 13 noch mittels Polymer-Noppen gegen ein Verrutschen auf der Unterlage sichern.

Die Figur 2 zeigt, teilweise angeschnitten, die Waage in einer Seitenansicht. Mit den Zapfen 11 und 12 ist das Zwischenstück 10 in die Öffnungen 8, 9 des Hohlraums am Boden 6 eingeklinkt. Hier kommt die Zweiteilung der Anzeige- und Bedieneinheit 13 zum Ausdruck. Der Sockel 19, welcher ein etwa h-förmiges Profil besitzt, wodurch eine etwa rechteckförmige Aussparung 20 an seiner Unterseite entsteht, steht stabil auf der Unterlage. In diese Aussparung 20 greift die Plattform 21 des Zwischenstücks 10 ein, lässt jedoch nach oben und unten genügend Freiraum, um in der Aussparung geringfügig verkippen zu können. Auf diese Weise können die Waage einerseits und die Anzeige- und Bedieneinheit 13 andererseits, obwohl verbunden, unabhängig voneinander auf der Unterlage fest stehen und die Waage kann nivelliert werden, ohne dass die Lage der Anzeige- und Bedieneinheit 13 verändert wird.

Oberhalb der Füsse 41 verfügt die Anzeige- und Bedieneinheit 13 über ein Scharnier 37. Um dieses ist der obere Teil der Anzeige- und Bedieneinheit 13 verschwenkbar zur Verstellung seiner Neigung. Ein Rastmechanismus 39 dient der Fixierung einer einmal eingestellten Neigung.

Das Kabel 14, welches in der Rinne 38 in den Zwischenraum zwischen den beiden Teilen der Anzeige- und Bedieneinheit 13 geführt wird, ist mittels des Steckers 15 am oberen Teil der Anzeige- und Bedieneinheit 13 in eine sich dort befindliche Buchse eingesteckt. Durch einen Ausgang 22 (siehe Figur 1) wird das Kabel 14 in den als Schacht 24 ausgebildeten Bodenraum 6 geführt und verläuft dort bis zu seinem der Verbindung mit der Waage dienenden Ende. Ein weiterer Stecker 23 an dem sich im Inneren des Schachts befindlichen Ende des Kabels 14 stellt die Verbindung zur Elektronik (hier nicht sichtbar) her. Der Schacht 24 ist vorzugsweise flach ausgestaltet, um den Bodenraum 6 der Waage nicht unnötig zu erhöhen. Die Höhe des Schachts 24 ist bestimmt durch die Kabeldicke einerseits und andererseits durch die Forderung, dass sich das Kabel 14 nicht in vertikaler Richtung verbiegen darf.

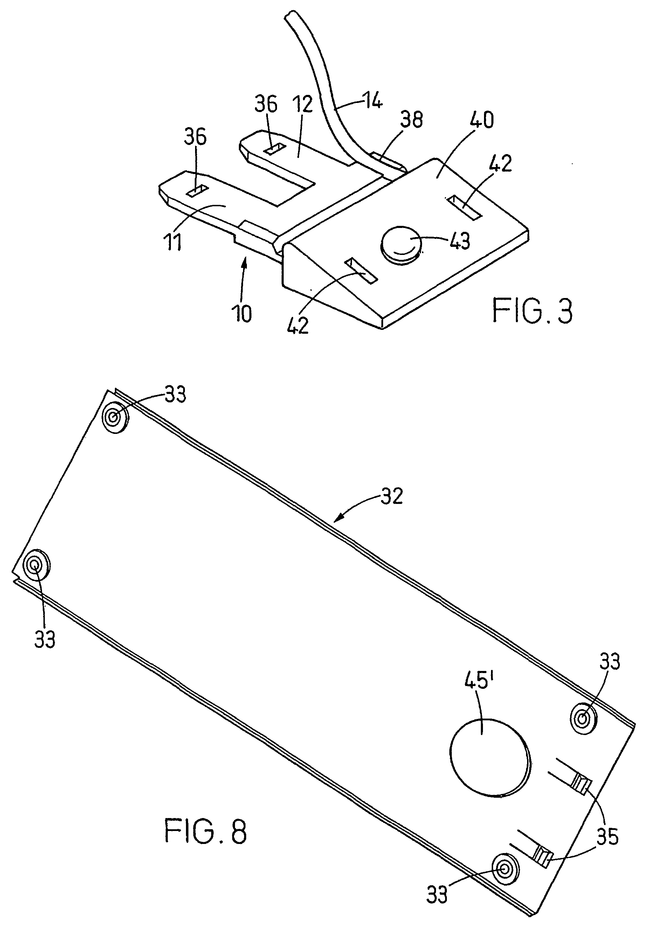

Eine andere Ausführungsform einer Verbindung einer Anzeige- und Bedieneinheit mit dem Zwischenstück 10 zeigt die Figur 3 in einer dreidimensionalen Darstellung. Hier ist ein Verbindungskeil 40 in der gleichen Weise mit dem Zwischenstück 10 verbunden, wie für den Sockel 19 anhand der Figur 2 beschrieben. Auf der Oberseite des Verbindungskeils 40 befinden sich längliche Löcher oder Buchsen 42, die sowohl der direkten mechanischen als auch der elektrischen Verbindung von Verbindungskeil 40 und oberem Teil der Anzeige- und Bedieneinheit dienen können. Alternativ dazu ist es denkbar, eine Sende-Empfangseinheit 43 auf dem Verbindungskeil 40 anzubringen, über welche die elektronischen Signale einer eventuell weiter entfernt, beispielsweise in der Hand zu haltenden und mit einer entsprechenden weiteren Sende-Empfangseinheit versehenen Anzeige- und Bedieneinheit zu übermitteln und umgekehrt.

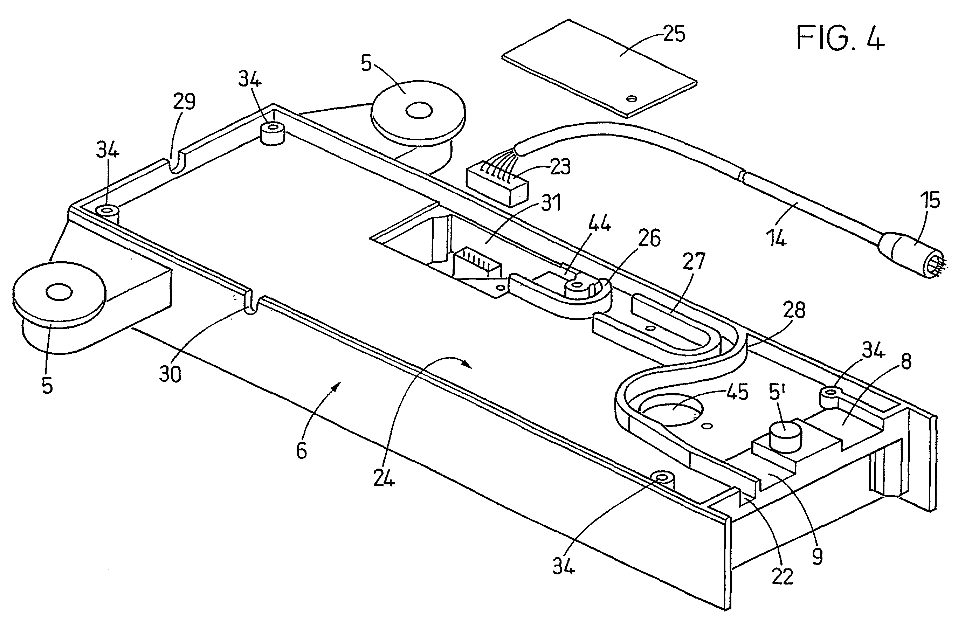

Die Figur 4 zeigt in einer perspektivischen Ansicht von unten den im Bodenraum 6 der Waage ausgebildeten Schacht 24 sowie ein aus der Verbindung mit der Elektronik gelöstes Kabel 14. Zum Schutz gegen Staubeinflüsse ist der Zugang 31 zur Wäge-Elektronik mit einer Abdeckung 25 verschliessbar. Das Kabel 14 gelangt durch die Nut 44 in den Schacht 24. Dort sind verschiedene Führungsbogen 26, 27, 28, in einer jeweils speziellen, beispielsweise haken-, u- oder s-förmigen Ausgestaltung angeordnet. Aufgabe dieser Führungsbogen 26, 27, 28 ist es, das im Schacht 24 frei bewegliche Kabel 14 beim Herausziehen und Hineinschieben aus dem bzw. in den Schacht 24, so zu führen, dass es sich nirgends selbst berührt, wodurch es möglicherweise infolge zu grosser Reibung nicht mehr aus- und einziehbar wäre. Ausserdem wird so vermieden, dass das Kabel 14 knickt. Die Führungsbogen 26, 27, 28 sind in einer Weise angeordnet, dass sie eine hohe Flexibilität hinsichtlich des Durchtritts des Kabels 14 aus dem Schacht 24, sei es am Ausgang 22 an der Vorderseite, am Ausgang 29 an der Rückseite oder am Ausgang 30 seitlich des Schachts 24 erlauben. Das Loch 45 im Boden des Schachts ist für den Durchtritt eines Krafteinleitungs-Gestänges für die Unterflurwägung vorgesehen.

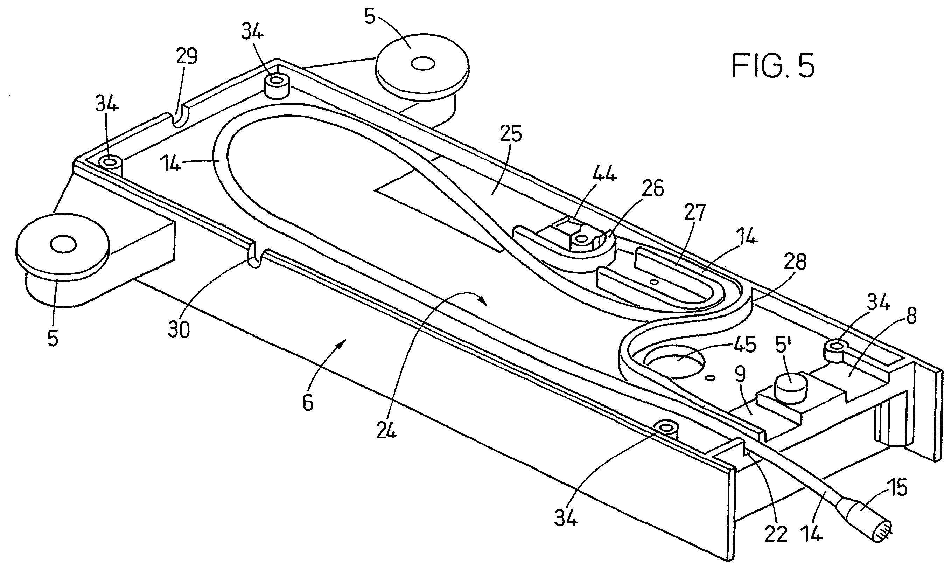

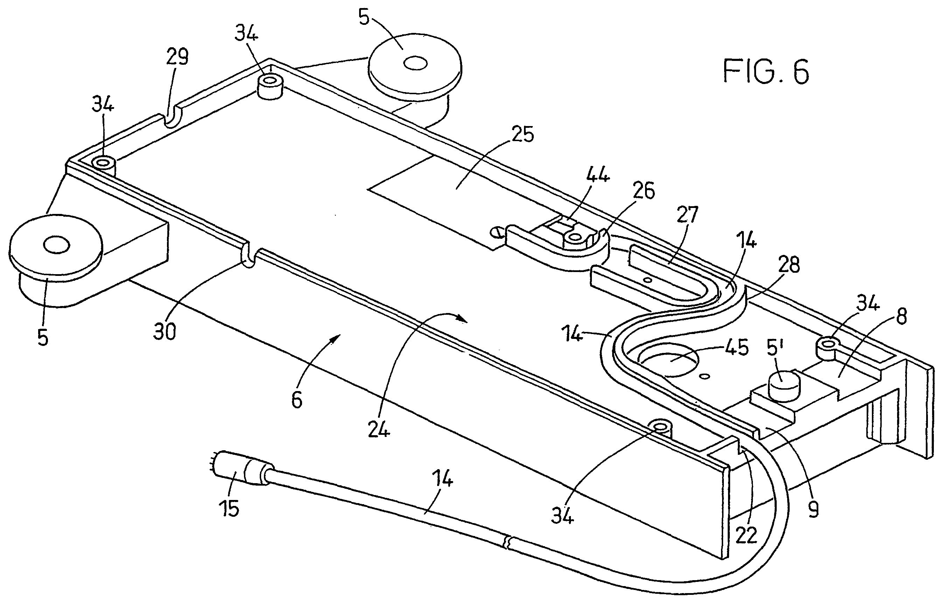

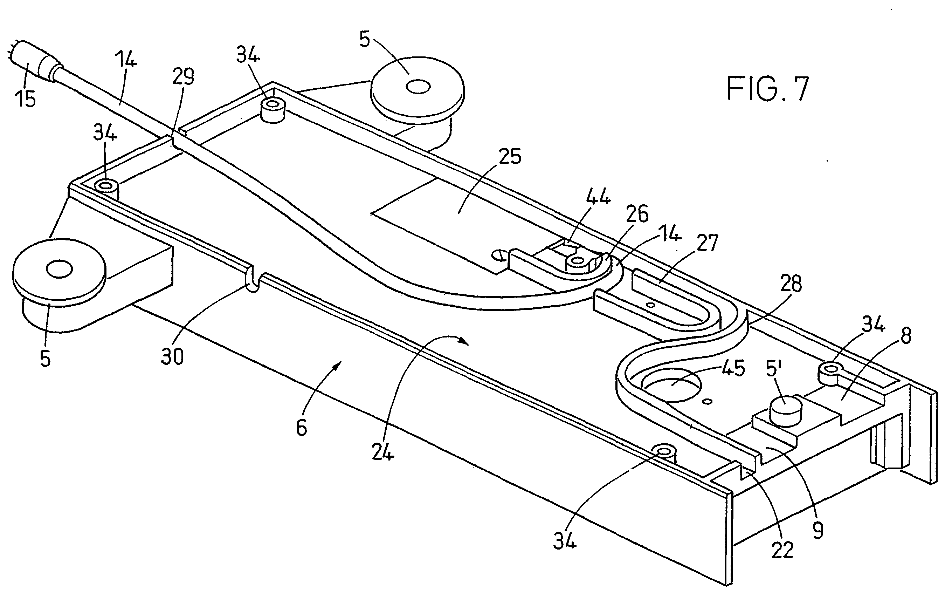

Die Figur 5 zeigt in dreidimensionaler Darstellung aus der Sicht von unten in den Bodenraum 6 das weitgehend in den Schacht 24 hinein geschobene Kabel 14, welches zum vorderen Ausgang 22 geführt ist, die Figur 6 in der gleichen Darstellungsform das zum vorderen Ausgang 22 geführte, weitgehend heraus gezogene Kabel 14 und die Figur 7 das zum hinteren Ausgang 29 geführte teilweise heraus gezogene Kabel 14. Anhand dieser drei Figuren wird die Flexibilität in der Führung des Kabels 14 im Schacht 24 mittels der Führungsbogen 26, 27, 28 deutlich. Als Konsequenz davon ergibt sich für die Positionierung der Anzeige- und Bedieneinheit 13 in Bezug auf das Gehäuse 1 ein entsprechend hoher Freiheitsgrad: Sie kann nun sowohl direkt am Gehäuse 1, als auch entfernt von diesem vorne, seitlich oder hinter dem Gehäuse 1 platziert sein, wobei jeweils der Ausgang 22, 29, 30 des Kabels 14 noch frei gewählt werden kann. In jedem Fall ist das Kabel immer in der benötigten Länge aus dem Schacht 24 gezogen. Eine Veränderung der Position der Anzeige- und Bedieneinheit 13 kann mit einer Hand bewerkstelligt werden, indem entweder beim Entfernen der Anzeige- und Bedieneinheit 13 vom Gehäuse 1 das Kabel 14 aus dem Schacht 24 gezogen wird, oder beim Annähern das Kabel 14 zum Ausgang 22, 29, 30 geschoben wird und durch diesen in den Schacht 24 gleitet. Soll die Anzeige- und Bedieneinheit 13 ein- oder ausgesteckt werden, so erweist sich die Flexibilität des Kabels 14 als vorteilhaft, da es einfach ein kleines Stück aus dem Schacht 24 gezogen wird und somit gut handhabbar wird.

Von besonderem Vorteil bei dieser hohen Flexibilität für die Platzierung der Anzeige- und Bedieneinheit 13, ist, dass diese jederzeit abnehmbar und gegen eine andere auswechselbar ist, begünstigt dadurch dass sie mittels des Steckers 15 jederzeit vom Kabel 14 gelöst werden kann. Dies macht auch ein Reinigen der Arbeitsfläche unter der Anzeige- und Bedieneinheit 13 einfach.

Nach unten ist der Schacht 24 mit einer in der Figur 8 gezeichneten Bodenplatte 32 verschliessbar, welche sich vorzugsweise durch die Schraublöcher 33 mit vier Schrauben an den im Schacht 24 vorhandenen Bolzen mit Innengewinde 34 (siehe Figuren 4 bis 7) anschrauben lässt. Die Bodenplatte 32 besitzt an ihrer dem Schachtinnern zugewandten Seite zwei Einklinkfedern 35 für die Halterung des Zwischenstücks 10 an in den Zapfen 11, 12 eingebrachten Vertiefungen 36 (siehe Figur 1 oder 3). Diese stabile Halterung des Zwischenstücks 10 erlaubt ein Anheben der Waage zusammen mit der auf dem Zwischenstück 10 positionierter Anzeige- und Bedieneinheit 13, beispielsweise an einem Griff, wie in der EP 1 195 585 B1 beschrieben. Andererseits kann die Anzeige- und Bedieneinheit 13 auch zusammen mit dem Zwischenstück 10 bewegt werden, um beide an anderer Stelle zu platzieren. In einer dritten Variante der Handhabung der Waage kann ein Benutzer auch das Zwischenstück 10 an dem Waagengehäuse 1 belassen und nur die Anzeige- und Bedieneinheit 13 entfernen.

Die Plattform 21 des Zwischenstücks 10 kann nun auch als Informationsträger genutzt werden, indem beispielsweise eine Kurzform der Betriebsanleitung aufgedruckt ist oder alternativ eine Vorschrift für die Durchführung eines bestimmten, immer wiederkehrenden Wägevorgangs. Dies kann auch in Form eines mit der Plattform 21 verbundenen Faltblattes realisiert werden. Um die Information zu lesen, muss der Bediener der Waage lediglich die Anzeige- und Bedieneinheit 13 vom Zwischenstück 10 abheben.

Es können auch mehr als nur ein Kabel 14 im Schacht 24 untergebracht und zu verschiedenen Ausgängen 22, 29, 30 geführt sein. Diese verschiedenen Kabel sind dann alternativ verwendbar oder es können gleich zwei der Anzeige- und Bedieneinheiten 13 oder Verbindungskeile 40 mit der Waage verbunden sein. Es ist auch denkbar, eines der Kabel 14 direkt mit einem Computer zu verbinden.

### Bezugszeichenliste

- 1: Gehäuse, Waagengehäuse
- 2: Hinterer Teil des Gehäuses
- 3: Wägeraum
- 4: Waagschale
- 5, 5': Füsse
- 6: Boden, Bodenraum
- 7: Vorderseite
- 8: Öffnung
- 9: Öffnung
- 10: Zwischenstück
- 11: Zapfen
- 12: Zapfen
- 13: Anzeige- und Bedieneinheit
- 14: Kabel
- 15: Stecker
- 16: Oberseite
- 17: Bedientasten
- 18: Anzeigefeld
- 19: Sockel
- 20: Aussparung
- 21: Plattform
- 22: Ausgang vorne
- 23: Stecker
- 24: Schacht
- 25: Abdeckung
- 26: Führungsbogen hakenförmig
- 27: Führungsbogen u-förmig
- 28: Führungsbogen s-förmig
- 29: Ausgang hinten
- 30: Ausgang seitlich
- 31: Zugang zur Elektronik
- 32: Bodenplatte
- 33: Schraublöcher
- 34: Bolzen mit Innengewinde
- 35: Einklinkfedern
- 36: Vertiefung
- 37: Scharnier
- 38: Rinne
- 39: Rastmechanismus
- 40: Verbindungskeil
- 41: Füsse der Anzeige- und Bedieneinheit
- 42: Längliche Löcher/Buchsen
- 43: Sende-Empfangseinheit
- 44: Nut
- 45, 45': Loch

## Patentansprüche

1. Waage mit einem einen Boden (6) aufweisenden Gehäuse (1), mit einer Anzeige- und Bedieneinheit (13), welche durch mindestens ein Kabel (14) mit der Waage verbindbar ist, wobei die Anzeige- und Bedieneinheit (13) sowohl am Gehäuse (1) als auch entfernt vom Gehäuse (1) platzierbar ist, **dadurch gekennzeichnet, dass** zur Unterbringung überschüssiger Länge des mindestens einen Kabels (14) am Boden (6) des Gehäuses (1) ein mit mindestens einem Ausgang (22, 29, 30) für den Durchtritt des Kabels (14) versehener Schacht (24) angebracht ist, dessen Höhe einerseits durch die Dicke des Kabels (14) bestimmt ist und andererseits durch die Forderung, dass sich das Kabel (14) nicht in vertikaler Richtung verbiegen darf, und in welchem das Kabel (14) beim Herausziehen und Hineinschieben frei beweglich ist.

2. Waage nach Anspruch 1, **dadurch gekennzeichnet, dass** sich der Schacht (24) über den gesamten Boden (6) erstreckt.

3. Waage nach Anspruch 1 oder 2, **dadurch gekennzeichnet, dass** der Schacht (24) in den Boden (6) integriert ist.

4. Waage nach Anspruch 1,2 oder 3, **dadurch gekennzeichnet, dass** im Schacht (24) Führungselemente (26, 27, 28) für das Kabel (14) vorhanden sind.

5. Waage nach Anspruch 4, **dadurch gekennzeichnet, dass** die Führungselemente (26, 27, 28) als in den Schacht (24) integrierte Führungsbogen, insbesondere in haken-, u- oder s-förmiger Ausgestaltung, ausgebildet sind.

6. Waage nach einem der Ansprüche 1 bis 5, **dadurch gekennzeichnet, dass** das Kabel (14) im Inneren der Waage mittels eines Steckers (23) mit der Wäge-Elektronik verbindbar ist.

7. Waage nach einem der Ansprüche 1 bis 6, **dadurch gekennzeichnet, dass** die Anzeige- und Bedieneinheit (13) am Gehäuse (1) befestigbar ist.

8. Waage nach einem der Ansprüche 1 bis 6, **dadurch gekennzeichnet, dass** die Anzeige- und Bedieneinheit (13) mittels eines Zwischenstücks (10) am Gehäuse (1) geführt ist.

9. Waage nach Anspruch 8, **dadurch gekennzeichnet, dass** das Gehäuse (1) sowie die Anzeige- und Bedieneinheit (13) einen voneinander unabhängigen Stand auf der Unterlage aufweisen.

10. Waage nach Anspruch 8 oder 9, **dadurch gekennzeichnet, dass** das Zwischenstück (10) am Gehäuse (1) oder an der Anzeige- und Bedieneinheit (13) einsteckbar ausgestaltet ist.

11. Waage nach Anspruch 8, 9 oder 10, **dadurch gekennzeichnet, dass** das Zwischenstück (10) über eine Plattform (21) verfügt, die als Informationsträger nutzbar ist.

12. Waage nach Anspruch 8, 9 oder 10, **dadurch gekennzeichnet, dass** auf dem Zwischenstück (10) eine Sende-Empfangseinheit (43) angebracht ist und die Anzeige- und Bedieneinheit (13) ebenfalls über eine Sende-Empfangseinheit verfügt, wobei elektronische Signale zwischen beiden Sende-Empfangseinheiten übermittelbar sind.

13. Waage nach einem der Ansprüche 1 bis 12, **dadurch gekennzeichnet, dass** der Schacht (24) auf verschiedenen Seiten jeweils mindestens einen Ausgang (22, 29, 30) für das mindestens eine Kabel (14) aufweist.

14. Waage nach einem der Ansprüche 1 bis 13, **dadurch gekennzeichnet, dass** der Schacht (24) für die Unterbringung von mehr als einem Kabel (14), welche durch verschiedene Ausgänge (22, 29, 30) herausziehbar und hineinschiebbar sind, ausgestaltet ist.

15. Waage nach einem der Ansprüche 1 bis 14, **dadurch gekennzeichnet, dass** der Schacht (24) nach unten durch eine Bodenplatte (32) abgeschlossen ist.

16. Waage nach einem der Ansprüche 1 bis 15, **dadurch gekennzeichnet, dass** das mindestens eine Kabel (14) an dem mit der Anzeige- und Bedieneinheit (13) verbindbaren Kabelende einen Stecker (15) aufweist, dessen zugehörige Buchse in der Anzeige- und Bedieneinheit (13) untergebracht ist.

17. Waage nach einem der Ansprüche 1 bis 16, **dadurch gekennzeichnet, dass** die Anzeige und Bedieneinheit (13) in ihrer Neigung verstellbar ist.

18. Waage nach einem der Ansprüche 1 bis 17, **dadurch gekennzeichnet, dass** mehr als eine Anzeige- und Bedieneinheit (13) mit der Waage verbindbar sind.

## Claims

1. Balance with a housing (1) that has a bottom (6), and with a display/operating unit (13) connectable to the balance through at least one cable (14), wherein the display/operating unit can be placed either adjacent to the housing (1) or at a distance from the housing (1), **characterized in that** for storing an unused length of the at least one cable (14), a corridor compartment (24) is arranged at the bottom (6) of the housing (1) with at least one exit opening (22, 29, 30) for the passage of the cable (14), wherein the height of the corridor compartment (24) is determined on the one hand by the thickness of the cable (14) and on the other hand by the requirement that the cable (14) must not be allowed to bend in the vertical direction, and wherein the cable (14) is freely movable inside the corridor compartment (24) when the cable is pulled out or pushed in.

2. Balance according to claim 1, **characterized in that** the corridor compartment (24) extends over the whole bottom (6).

3. Balance according to claim 1 or 2, **characterized in that** the corridor compartment (24) is integrated in the bottom (6).

4. Balance according to claim 1, 2 or 3, **characterized in that** the corridor compartment (24) contains guide elements (26, 27, 28) to guide the cable (14).

5. Balance according to claim 4, **characterized in that** the guide elements (26, 27, 28) are configured as curved guide walls that are integrated in the corridor compartment (24) and are in particular hook-shaped, U-shaped, or S-shaped.

6. Balance according to one of the claims 1 to 5, **characterized in that** the cable (14) is connectable to the weighing-related electronic circuit by means of a cable plug (23) in the interior of the balance.

7. Balance according to one of the claims 1 to 6, **characterized in that** the display/operating unit (13) is connectable to the housing (1).

8. Balance according to one of the claims 1 to 6, **characterized in that** the display/operating unit (13) is held in place at the housing (1) by means of an intermediate member (10).

9. Balance according to claim 8, **characterized in that** the housing (1) and the display/operating unit (13) can both be in stable contact with the work surface independently of each other.

10. Balance according to claim 8 or 9, **characterized in that** the intermediate member (10) is configured to be plugged into the housing (1) or into the display/operating unit (13).

11. Balance according to claim 8, 9 or 10, **characterized in that** the intermediate member (10) has a flat portion (21) that is usable to carry information.

12. Balance according to claim 8, 9 or 10, **characterized in that** an emitter/receiver unit (43) is arranged on the intermediate member (10) and that the display/operating unit (13) is likewise equipped with a emitter/receiver unit, so that electronic signals can be transmitted between the two emitter/receiver units.

13. Balance according to one of the claims 1 to 12, **characterized in that** the corridor compartment (24) has on each of two or more different sides at least one exit opening (22, 29, 30) for the at least one cable (14).

14. Balance according to one of the claims 1 to 13, **characterized in that** the corridor compartment (24) is configured so that it can accommodate two or more cables (14) that can be pulled out or pushed in through different exit openings (22, 29, 30).

15. Balance according to one of the claims 1 to 14, **characterized in that** the corridor compartment (24) is covered at the underside by a bottom plate (32).

16. Balance according to one of the claims 1 to 15, **characterized in that** the at least one cable (14) has a cable plug (15) at the cable end that is connectable to the display/operating unit (13), and that the plug-in socket for the cable plug (15) is arranged in the display/operating unit (13).

17. Balance according to one of the claims 1 to 16, **characterized in that** the display/operating unit (13) can be set at an adjustable tilt angle.

18. Balance according to one of the claims 1 to 17, **characterized in that** more than one display/operating unit (13) can be connected to the balance.

## Revendications

1. Balance comprenant un boîtier (1) présentant un fond (6), une unité d'affichage et de commande (13), qui est reliée à la balance par au moins un câble (14), l'unité d'affichage et de commande (13) pouvant être placée aussi bien sur le boîtier (1) qu'à distance du boîtier (1), **caractérisée en ce que**, pour le logement de la longueur excédentaire du au moins un câble (14), une gaine (24) pourvue d'au moins une sortie (22, 29, 30) pour le passage du câble (14) est placée sur le fond (6) du boîtier (1), gaine dont la hauteur est déterminée d'une part par l'épaisseur du câble (14) et d'autre part par l'exigence que le câble (14) ne doit pas se plier dans le sens vertical, et dans laquelle le câble (14) peut se déplacer librement lors de l'extraction et de l'introduction.

2. Balance selon la revendication 1, **caractérisée en ce que** la gaine (24) s'étend sur l'ensemble du fond (6).

3. Balance selon la revendication 1 ou 2, **caractérisée en ce que** la gaine (24) est intégrée dans le fond (6).

4. Balance selon la revendication 1, 2 ou 3, **caractérisée en ce que** des éléments de guidage (26, 27, 28) pour le câble (14) sont présents dans la gaine (24).

5. Balance selon la revendication 4, **caractérisée en ce que** les éléments de guidage (26, 27, 28) sont conçus comme des arcs de guidage intégrés dans la gaine (24), en particulier dans une conception en forme de crochet, de u ou de s.

6. Balance selon l'une quelconque des revendications 1 à 5, **caractérisée en ce que** le câble (14) peut être relié à l'électronique de pesée à l'intérieur de la balance au moyen d'un connecteur (23).

7. Balance selon l'une quelconque des revendications 1 à 6, **caractérisée en ce que** l'unité d'affichage et de commande (13) peut être fixée au boîtier.

8. Balance selon l'une quelconque des revendications 1 à 6, **caractérisée en ce que** l'unité d'affichage et de commande (13) est guidée au moyen d'une pièce intermédiaire (10) sur le boîtier (1).

9. Balance selon la revendication 8, **caractérisée en ce que** le boîtier (1) ainsi que l'unité d'affichage et de commande (13) sont en contact stable sur le support, indépendamment l'un de l'autre.

10. Balance selon la revendication 8 ou 9, **caractérisée en ce que** la pièce intermédiaire (10) est conçue de façon emboîtable sur le boîtier (1) ou sur l'unité d'affichage et de commande (13).

11. Balance selon la revendication 8, 9 ou 10, **caractérisée en ce que** la pièce intermédiaire (10) dispose d'une plate-forme (21), qui peut être utilisée comme support d'information.

12. Balance selon la revendication 8, 9 ou 10, **caractérisée en ce qu'**une unité d'émission-réception (43) est placée sur la pièce intermédiaire (10) et l'unité d'affichage et de commande (13) dispose également d'une unité d'émission-réception, des signaux électroniques pouvant être transmis entre les deux unités d'émission-réception.

13. Balance selon l'une quelconque des revendications 1 à 12, **caractérisée en ce que** la gaine (24) présente sur chacun des différents côtés au moins une sortie (22, 29, 30) pour le au moins un câble (14).

14. Balance selon l'une quelconque des revendications 1 à 13, **caractérisée en ce que** la gaine (24) est conçue pour le logement de plus d'un câble (14), câbles qui peuvent être extraits et introduits au moyen de diverses sorties (22, 29, 30).

15. Balance selon l'une quelconque des revendications 1 à 14, **caractérisée en ce que** la gaine (24) est fermée vers le bas par une plaque de fond (32).

16. Balance selon l'une quelconque des revendications 1 à 15, **caractérisée en ce que** le au moins un câble (14) présente sur l'extrémité de câble pouvant être reliée à l'unité d'affichage et de commande (13) une fiche (15) dont la douille correspondante est logée dans l'unité d'affichage et de commande (13).

17. Balance selon l'une quelconque des revendications 1 à 16, **caractérisée en ce que** l'unité d'affichage et de commande (13) peut être réglée dans son inclinaison.

18. Balance selon l'une quelconque des revendications 1 à 17, **caractérisée en ce que** plus d'une unité d'affichage et de commande (13) peuvent être reliées à la balance.
